Europäisches Patentamt

European Patent Office

Office européen des brevets

(11) Publication number: **0 185 000**
**B1**

## (12) EUROPEAN PATENT SPECIFICATION

(45) Date of publication of patent specification: **25.01.89**

(51) Int. Cl.⁴: **A 23 D 3/02,** A 23 D 3/00

(21) Application number: **85850118.2**

(22) Date of filing: **01.04.85**

(54) **Method of manufacturing a low calorie spread having a relatively high amount of milk fat and low calorie spread manufactured accordingly.**

(30) Priority: **06.12.84 SE 8406206**

(43) Date of publication of application:
**18.06.86 Bulletin 86/25**

(45) Publication of the grant of the patent:
**25.01.89 Bulletin 89/04**

(84) Designated Contracting States:
**AT BE CH DE FR GB IT LI NL**

(56) References cited:
**EP-A-0 142 168**
**FR-A-1 139 264**
**US-A-4 307 125**
**US-A-4 439 461**

(73) Proprietor: **Arla, ekonomisk förening**
**Dalagatan 3**
**S-105 46 Stockholm (SE)**

(72) Inventor: **Wallgren, Kurt**
**c/o Arla ekonomisk förening Box 5407**
**S-402 29 Göteborg (SE)**
Inventor: **Larsson, Jan Ake**
**c/o Arla ekonomisk förening Box 126**
**S-533 01 Götene (SE)**

(74) Representative: **Avellan-Hultman, Olle**
**Avellan-Hultman Patentbyra AB P.O. Box 5366**
**S-102 46 Stockholm 5 (SE)**

Courier Press, Leamington Spa, England.

## Description

The present invention generally relates to a method of manufacturing a low calorie spread comprising milk fats and milk foreign fats.

More particularly the invention relates to a method of manufacturing a spread having between 36 and 50% fat content or preferably about 40% fat content by a process allowing manufacture of the low calorie spread without the use of butter oil.

Normally low calory spreads are manufactured in that a water phase and a fat phase are prepared parallelly to each other and in which the water phase contains proteins and different water soluble ingredients and in which the fat phase contains oils and fats and different fat soluble ingredients, whereupon the water phase is brought to emulsify with the fat phase to provide a water-in-oil emulsion having the intended fat content, generally a fat content of between 35 and 60%.

In previously known methods of manufacturing low calorie spreads containing butter fat, butter oil generally has been used as an essential part of the fat phase. The manufacture of butter oil is a relatively expensive and complicated process for which a special and complicated equipment is needed, which equipment is often not available, especially not in small type dairy industries. From manufacturing view point it therefore should be of substantial advantage if a low calorie spread could be manufactured without the use of butter oil, whereby there is no need to provide an expensive and complicated manufacturing equipment and there is no need for making use of the expensive and fairly complicated process of manufacturjng, handling and storing and packing butter oil.

The basis of the invention therefore has been the problem of providing a process for manufacturing of a spread or margarine having a relatively high amount of butter fat and having a fat content of between 36 and 50% or preferably 40%, in which the process in prosecuted without use of butter oil and by means of such ordinary manufacturing equipment which is normally available in dairy industries or which can be provided to a cost which is substantially less than the cost for an equipment for manufacturing of butter oil.

The specific feature of the invention in the manufacture of the fat phase for a low calory spread having a relatively high amount of butter fat is that the generally used butter oil is substituted by a butter fat which is prepared according to a more simple process while using a more simple and cheap equipment than the equipment used for manufacture of butter oil.

According to the invention the step of peparing the fat phase is stated using ordinary cream having a fat content of between 35 and 48% or preferably about 42% which subsequent to some temperature treatment is treated so that the cream emulsion is broken up, whereupon the broken up emulsion comprising butter grains and butter milk is separated on a vibrating, sieve-like plate for separating the largest portion of the buttermilk. The isolated butter grains are heated to a temperature above the melting point of the butter fat, and the melted butter fat is mixed both with cured and/or uncured oils and fats in a wanted amount and with other fat or water soluble ingredients generally used in the fat phase preparing process, like emulsifier, salt, taste and colour substances etc. Some of the ingredients may as well be supplied to the water phase instead of to the fat phase. Parallelly to the preparation of the fat phase a water phase is prepared containing a high amount proteins, generally about 9—18% proteins, and different water soluble ingredients as conventional for the process. The water phase may be prepared following different processes and from different starting materials like butter milk or skim milk. The buttermilk contains some membrane proteins having good emulsifying properties and therefore a waterphase comprising a protein concentrate from buttermilk relatively simply gives a stable water-in-oil emulsion when emulsifying said protein containing water phase in the above mentioned fat phase. The water phase prepared from skimmilk may need some special treatment, for instance a treatment as described in the US patent 4,259,356 granted on April 1, 1981 and relating to "Method for the Production of Protein Concentrate" from skimmilk for subsequent use in manufacture of low calorie spreads.

The complete process for manufacture of low calorie spread having a relatively high amount of milk fat according to the invention comprises several manufacturing steps executed on a first line for preparing the fat phase and a second line for preparing the water phase and a third common line for finally producing the low calorie spread.

### I PREPARING THE FAT PHASE

1. Sweet cream having a fat content of 35—48% or most preferably about 42% is used as the starting material in the process, and the cream is temperature treated by being cooled to between +2 and +15°C or preferably about +5°C and the cream is stored at said temperature for a period of between 6 and 24 hours. During said storing time the fat crystallizes. Said crystallization is a prerequisite for the breaking up of the cream emulsion as will be described in the following.

If the fat content of the cream is less than 35% it is difficult to provide a separation of the fat, if on the other hand the fat content is higher than 48% there may be problems in that the fat becomes separated already at the above mentioned cooling process. If the cooling takes place at a temperature below +2°C the storing time for the cream becomes so short that some problems may appear, if the cooling is made at temperatures above +15°C the storing time, on the other hand, becomes unpractically long, generally more than 24 hours, and in addition thereto it may be difficult to separate the fat. If it is wanted to maintain the cream cooled for only six hours or less it is necessary to keep the cream at a very low temperature, and also in that case it may be difficult to have the fat separated. Empirically it has shown that the temperature of about +5—6°C is the most suitable temperature for providing the best possible separation of the fat from the cream.

2. The temperature treated and stored cream is subjected to a mechanical treatment which gives the cream such pressure that the emulsion is broken. The pressure may be provided in that the cream is forced through a pump transmitting such energy to the cream that the emulsion is broken. The breaking up of the cream emulsion is of critical importance to the subsequent provision of the fat phase for the water-in-oil emulsion.

The mechanical treatment of the cream should be such that the cream is subjected to a pressure of about 1.5—3.0 bar or preferably 2—2.5 bar. A too low pressure eminating from the mechanical treatment does not give the intended breaking of the emulsion and thereby makes an effective separation of the fat from the cream difficult or impossible, and a too high pressure damages the cream and also causes technical and economical problems. At a too high pressure it may happen that the cream is transferred to a butter like, paste formed product, which is not useful for the continued process in this connection. The pressure treatment can be made in various ways, but it has shown to be suitable to force the cream through a liquid ring pump or a similar means giving the cream the intended pressure. The liquid ring pump should be formed with a choke means by means of which the pressure can be controlled to a suitable level. It is also possible to utilize two liquid ring pumps connected in series with or without a choke means and mounted with or without combination with an emulsifying pump.

3. The cream emulsion which has now become broken providing butter grains and butter milk is separated on a vibrating, sieve-like plate for removing the largest possible amount of the buttermilk. The sievelike plate may be any type of plain plate or rotatable drum formed with a large number of bores or slots of such width that the milk fraction passes through the plate or drum whereas the butter grains remain on the plate.

The buttermilk may be recovered for preparing a protein concentrate which can be used at least as a part of the waterphase in the subsequent process.

4. The butter grains received at the separation steps are heated to a temperature above the melting point of the butter fat, for instance a temperature of between 35 and 55°C and are mixed both with milk foreign other oils and/or fats and with other fat soluble ingredients like emulsifiers, vitamines, salts, taste substances, colour substances etc. The milk foreign fats may be cured and/or uncured palm oil, soy oil, colza oil, coconut oil and other cured and/or uncured oils or mixtures thereof. The butter fat eminating from the original cream may be present in an amount of between 70 and 30% of the total fat content, and the remaining oils and fats consequently are present in an amount of between 30 and 70%.

## II PREPARING THE WATER PHASE

5. The preparation of the water phase can be made according to different processes which are known per se and from any suitable milk raw material like buttermilk and skimmilk, and it is also possible to utilize the buttermilk separated from the cream. The water phase is a protein concentrate having possible additions of water soluble ingredients like salt, vitamines, taste substances, colour substances etc., and it may be prepared according to any known method and from any milk raw material, for instance according to the method described in the above mentioned US Patent, 4,259,356.

## III EMULSIFICATION

6. In this step the emulsification takes place in that the waterphase at a temperature of 38—55°C or preferably 45—50°C is successively supplied to the fat phase having preferably a slightly higher temperature than the water phase. The supply of water phase to the fat phase can be made batchwise or continuously and is made under vigorous mechanical working, especially mixture, whereby the water phase is emulsified in the fat phase to a direct formation of a water-in-oil emulsion. Meantime a careful checking can be made both of the fat content of the emulsion and that the emulsion is of the water-in-oil type. The fat content is controlled by the supply of water phase so that the fat content becomes 36—50% or preferably 39—41%. In this step also possible aroma substances may be added.

7. After the emulsification is finished the product is made ready as conventional by being pasteurized, suitably at 72°C for 15 seconds or a slightly lower temperature or a correspondingly longer time or a slightly higher temperature and a correspondingly shorter time. The product is thereafter cooled on a scrape cooler or any other cooling means to obtain a temperature below 12°C, and the cooled products is worked mechanically so as to obtain a ductile consistency and as usual the products is packed hermetically and distributed or stored.

Now the invention is to be described more closely in connection to several examples of the method. The examples illustrate the manufacture of low calorie spreads having fat contents of between 36 and 50% and having different amount of butter fat in relation to other fat. In the heading the relative percentage of butter fat in relation to butter strange fat is indicated within brackets.

EXAMPLE 1
(70/30% butter fat/other fats)

100 kg cream having a fat content of 42%, which after separation gives 42 kg butter fat, was cooled to +5°C and was stored at said temperature at 20 hours to crystallize the fat. For breaking the emulsion of the stored cream the cream was forced through a liquid ring pump giving the cream a pressure of about 2.0 bar. The said pressure provided a breaking up of the emulsion of the cream so that the butter fat of the cream was released in the form of small fat balls or butter grains. The broken emulsion, which thus appeared in the form of butter grains and butter milk was separated on a vibrating sievelike plate having a sieve gauge allowing the buttermilk to pass whereas the butter grains remained and could be collected from the sieve plate. The separation was pursued so that the largest possible amount of the buttermilk was drained. The cream was heated in a tank to +37°C and further butter milk was separated, whereupon the melted fat was mixed with 0.7 kg of an emulsifier of the type monoglyceride and a slight amount of a colour substance and also with 13 kg uncured soy oil and 4 kg uncured coconut oil, whereby the content of butterfat from the original cream was 70% of the total fat content and the amount of the butter strange fat was about 30%.

Parallelly thereto a water phase was prepared comprising a protein concentrate from skimmilk made according to the known method as described in the US patent 4,259,356 and having a protein content of 20—24%. The preparation of the water phase is made as previously known and is therefore not described in detail. In this connection reference is made to the said US patent.

The temperature of the fat phase was controlled to about 55°C and the temperature of the water phase was controlled to about 45°C and the water phase was successively pumped into the fat phase, whereby a water-in-oil emulsion was directly formed. The fat content was in the meantime controlled, and the pump supply of the water phase in the fat phase was ceased when the fat content of the ready emulsion was 40%.

The ready emulsion was pasteurized at 72°C for 15 seconds and was then cooled in a three stage scrape cooler, in the first stage to +22°C, in the second stage to +15°C and in the third stage to +8°C, and the product was finally packed for distribution.

The ready low calorie spread had a butterlike taste and appearance and a smooth and even consistency and was free from hard lumps. It was well spreadable at refrigeration temperature and maintained a satisfactory consistency and spreadability also at room temperature. The low calorie spread was deemed quite equivalent to low calorie spreads manufactured according to other methods.

### EXAMPLE 2
### (83/17% butter fat/other fat)

The process according to example 1 was repeated in that 120 kg cream having a fat content of 40% was cooled to +5°C and was kept at this temperature for 12 hours to crystallize the butter fat whereupon the cream was pumped through a liquid ring pump having a choke means which gave the cream a pressure of about 2.5 bar. Thereby a mixture of butter fat balls in a buttermilk fraction was obtained. It was noted that there were slight difficulties of having the emulsion break, possibly for the reason that the storing time of the cream was too short. After the cream had separated on a vibrating sieve plate the butter milk fraction was drained whereas the fat fraction was mixed with 0.7 kg emulsifier of the monoglyceride type and 9.3 kg soy oil and a slight amount of butter aroma.

The water phase was prepared like in example 1, and the two phases were emulsified together by vigorous mechanical stirring, whereupon the water-in-oil emulsion thereby formed was pasteurized, cooled and packed like in example 1. The manufactured margarine had a total fat amount of 40%, 83% of which was butter fat from the cream and 17% was butter foreign fat. The margarine had a slightly harder consistency than the margarine according to example 1 and it had the same good taste, appearance and texture.

### EXAMPLE 3
### (100/0% butter fat/other fat)

The same method was repeated as in example 1, but for the difference that no milk foreign fat was added. All fat was received from 140 kg cream having a fat content of 42% which was stored at +5°C for 20 hours, whereupon the cream was pumped through a liquid ring pump giving the cream a pressure of 2.5 bar. After separation of the cream on a vibrating sieve plate the butter milk fraction was drained for possible subsequent preparation of the protein concentrate. The collected butter fat which gave a total fat amount of 59.2 kg was mixed with 0.7 kg emulsifier and was heat treated like in example 1 and was emulsified with a protein concentrate prepared according to the said peviously known method and to which 1 kg salt and a slight amount of coloured substance had been added.

The low calorie spread which had 40% fat content, had a good taste, aroma and texture, and the example shows that it is quite possible to manufacture the margarine without any addition of milk strange fats. This margarine may be regarded as a "light butter" having about 40% fat content.

### EXAMPLE 4
### (50/50% butter fat/other fat)

The same method was repeated as in example 1 in that 67 kg cream having a fat content of 45%, corresponding to 30,l kg butter fat was cooled to +15°C and was kept at said temperature for 24 hours. After pressure treatment by forcing the cream through a liquid ring pump giving the cream a pressure of 2.0 bar the cream was supplied to a vibrating sieve plate.

4

It was evident that the cream emulsion had not become broken to a sufficient extent to make it possible to complete the process. The reason therefore is that the cooling temperature of the cream was too high or alternatively that the storing time was too short. A storing time of more than 24 hours, however, is unsuitable for practical reasons, and the problems therefore are related only to the cooling temperature. It could be stated that the cooling temperature should be less than +15°C.

## EXAMPLE 5
### (50/50% butter fat/other fat)

For comparative reasons the method according to example 4 was repeated with the same amount of cream having the same fat content, but in this case the cream was cooled to +5°C and was kept at said temperature for 24 hours, whereupon the cream was pressure treated and separated like in example 1, and the butter milk was drained. The cream emulsion became relatively easily broken when the cream was pumped through a single liquid ring pump giving pressure of 1.5 bar, and the butter fat could easily be separated from the butter milk fraction on a vibrating sieve plate.

The separated butter fat which had a weight of 30.1 kg, was mixed with 0.7 kg emulsifier, 4.2 kg palm oil, 10 kg coconut oil and 15 kg soy oil and was heat treated like in example 4, a protein concentrate was supplied like in the previous examples so that the total fat amount was 40%, and the mixture was emulsified by vigorous mechanical stirring, it was pasteurized, cooled and packed. The manufactured low calorie spread had a good taste, consistency and texture.

## EXAMPLE 6
### (50/50% milk fat/other fat)

For judging the influence of the keeping time at the cooling treatment of the cream the present example was pursued with the same composition as in examples 4 and 5. The only difference was that the cream was cooled to +5°C and was kept at said temperature for only about 2 hours. Obviously it was not possible to break the emulsion, not even after a pressure treatment at 2.8 bar. If the pressure was further increased the cream obtained a butter like character and could not be separated. The reason that the cream emulsion could not be broken is that the storing time during the cooling process was too short.

In order to investigate the lowest possible limit for the fat amount when manufacturing the margarine according to the invention the following examples 7, 8, 9 and 10 were pursued.

## EXAMPLE 7
### (54/46% milk fat/other fat)

In this example 71 kg cream having a fat content of 46% was cooled to +5°C and was kept at this temperature for 24 hours. Thereafter the cream was forced through a liquid ring pump having a choke means giving the cream a pressure of 2.5 bar to break up the emulsion. After separation the butter milk fraction was drained and the butter fat, which had a weight of 32.7 kg was mixed with 0.75 kg emulsifier, 4.3 kg palm oil, 4.7 kg coconut oil and 18 kg soy oil and was heated to above +45°C. The fat content was controlled to 40% by admixture of a protein concentrate like in the previous examples, and the mixture was emulsified to a water-in-oil emulsion by vigorous mechanical working. The margarine had good taste, texture and spreadability.

## EXAMPLE 8
### (43/57% butter fat/other fat)

Example 7 was repeated but for the difference that the starting material was 65 kg cream having a fat content of 40% corresponding to 26 kg butter fat and the said butter fat was mixed with 0.7 kg emulsifier, 8.3 kg palm oil, 10 kg coconut oil and 15 kg soy oil and a slight amount of butter aroma. Also in this case a margarine was obtained which had an acceptable taste, consistency and texture and no problems appeared in breaking the cream emulsion.

## EXAMPLE 9
### (38/62% butter fat/other fat)

In this case the process was started with 60 kg cream having a fat content of 38% corresponding to 22.8 kg butter fat. After the same cooling and storing treatment and separation like in examples 7 and 8 the butter fat was mixed with 0.75 kg emulsifier, 12 kg palm oil, 10 kg coconut oil and 15.2 kg soy oil. Otherwise the process was pursued like in examples 7 and 8.

A slight difficulty appeared in providing the emulsion-breaking of the cream, but still the emulsion was broken as wanted and a margarine was obtained having 40% fat content and having a good taste, consistency and spreadability.

## EXAMPLE 10
### (32/68% milk fat/other fat)

The same process was executed like in example 9 but for the difference that the starting material of the present example was 55 kg cream having a fat content of 35% corresponding to 19.2 kg butter fat of the ready margarine. The butter fat was mixed with 0.8 kg emulsifier, 12 kg palm oil, 10 kg coconut oil and 18 kg soy oil.

In this case there were obvious difficulties in breaking the cream emulsion depending on the low fat content of the cream which gave a low amount of a butter fat of the ready margarine, viz. only 12.8% butter fat of the ready 40% margarine whereas milk foreign fats amounted to 22.2%

### EXAMPLE 11
#### (50/50% milk butter fat/other fat)

For judging the influence of the pressure when breaking the cream emulsion the following examples 11 and 12 were executed. In both cases the process was pursued like in example 5 and the cream consequently was cooled to +5°C and was stored for 24 hours. Also in both cases the cream was pumped through a liquid ring pump having a choke means. In the present example 11 the choke means was controlled to give the cream a pressure of about 1.25 bar. It was evident that such low pressure was not sufficient to enable the intended breaking up of the emulsion for the manufacture of the margarine.

### EXAMPLE 12
#### (50/50% butter fat/other fat)

In this example the choking of the liquid ring pump was adjusted to give the cream a pressure of about 3.5 bar. It was evident that the cream at said relatively high pressure was transformed to a butterlike mass having a soft, greasy consistency, and the cream was useless for the further manufacturing process. In previous examples it has been stated that a pressure of about 2—2,5 bar gives a very good result, and now it could be stated that the pressure of the cream for providing the breaking up of the emulsion should be within the limits 1.5 and 3.0 bar or preferably between 2.0 and 2.5 bar.

For judging the possibility of varying the total fat amount of the low calorie spread manufactured according to the invention the following examples 13 and 14 were pursued in which the actual fat content was 26 and 50% respectively.

### EXAMPLE 13
#### (fat amount 50%, 50/50% of which is milk fat/other fat)

The example was pursued in a process like in example 7 in that 55 kg cream having a fat content of 45% was cooled to +5°C and was kept at said temperature for 24 hours, whereupon the cream was pressure treated at 2.5 bar for breaking the cream emulsion. From the cream about 25 kg butter fat was obtained which was mixed with 5 kg palm oil, 5 kg coconut oil, 15 kg soy oil and 0.9 kg emulsifier, and the mixture was heated to +45°C. The total fat amount was controlled to 50% by admixture of a like large amount of protein concentrate, and the mixture was emulsified to a water in oil emulsion under heavy mechanical working.

As expected there were no difficulties in obtaining the intended emulsion having such fat content like in this example. For practical and economical reasons the said fat content may, however, be considered the upper limit for the manufacture of a low calorie spread in accordance with the present invention.

### EXAMPLE 14
#### (total fat content 36%, 50/50% of which was butter fat/other fat)

The same test was made as in example 13 in that 45 kg cream having a fat content of 40% was cool treated at +5°C for 24 hours and was pressure treated at 2.5 bar giving 18 kg butter fat. The butter fat was mixed with 2 kg palm oil, 5 kg coconut oil and 10 kg soy oil and 1.0 kg emulsifier. The fat content was controlled to 36% by admixture of 72 kg water phase under vigorous mechanical working. Evidently there were some problems in obtaining a good emulsion having the present low fat content, and phase inversions were likely to appear. Therefore it can be stated that a total fat content of 36% was the normal lower limit of the fat content for a low calorie spread manufactured according to the invention.

The above examples consequently prove that at least four different factors are of importance to give a good margarine having 36-50% or preferably 40% fat content and manufactured according to the above described method, viz. the storing temperature and the storing time during the cooling treatment of the cream, the amount of butter fat in relation to the amount of milk foreign fats and the pressure during the mechanical treatment preceding the breaking up of the cream emulsion. The above examples are summarized in the following table:

TABLE 1/2

| Ex nr | Fat mixture butter fat/other | kg | Cream fat-% | fat-kg | Other fat (kg) palm. | coco. | soy. |
|---|---|---|---|---|---|---|---|
| 1 | 70/30 | 100 | 42 | 42 | 0 | 4 | 13 |
| 2 | 83/17 | 120 | 40 | 50 | 0 | 0 | 9,3 |
| 3 | 100/0 | 141 | 42 | 59,2 | 0 | 0 | 0 |
| 4 | 50/50 | 67 | 45 | 30,1 | - | - | - |
| 5 | 50/50 | 67 | 45 | 30,1 | 4,2 | 10 | 15 |
| 6 | 50/50 | 67. | 45 | 30,1 | - | - | - |
| 7 | 54/46 | 71 | 46 | 32,7 | 4,3 | 4,7 | 18 |
| 8 | 43/57 | 65 | 40 | 26 | 8,3 | 10 | 15 |
| 9 | 38/62 | 60 | 38 | 22,8 | 12 | 10 | 15,2 |
| 10 | 32/68 | 55 | 35 | 19,2 | 12 | 10 | 18 |
| 11 | 50/50 | 67 | 45 | 30,1 | - | - | - |
| 12 | 50/50 | 67 | 45 | 30,1 | - | - | - |
| 13 | 50/50 | 55 | 45 | 25 | 5 | 5 | 15 |
| 14 | 50/50 | 45 | 40 | 18 | 2 | 5 | 10 |

TABLE 2/2

| Ex nr | Emulsifier kg | Storing time (h) | temp. | Pressure treatm. bar |
|---|---|---|---|---|
| 1 | 0,7 | 20 | 5 | 2,0 |
| 2 | 0,7 | 12 | 5 | 2,5 |
| 3 | 0,7 | 20 | 5 | 2,5 |
| 4 | - | 24 | 15 | 2,0 |
| 5 | 0,7 | 24 | 5 | 1,5 |
| 6 | - | 2 | 5 | 2,8 |
| 7 | 0,75 | 24 | 5 | 2,5 |
| 8 | 0,7 | 24 | 5 | 2,5 |
| 9 | 0,75 | 24 | 5 | 2,5 |
| 10 | 0,8 | 24 | 5 | 2,5 |
| 11 | - | 24 | 5 | 2,5 |
| 12 | - | 24 | 5 | 2,5 |
| 13 | 0,9 | 24 | 5 | 2,5 |
| 14 | 1,0 | 24 | 5 | 2,5 |

## Claims

1. Method of manufacturing a low calorie spread having a high amount of milk fat and having a total fat content of between 36% and 50% or preferably about 40% and not including any butter oil, whereby a fat phase and a protein containing water phase are prepared parallelly to each other, and in which the fat phase comprises butter fat or a mixture of butter fat and butter-foreign fats and/or oils, and in which the water phase is brought to emulsify with the fat phase to directly provide an emulsion of the water-in-oil type, characterized in

preparing a fat phase by cooling cream having a fat content of 35—46% to a temperature below +15°C and storing it at said temperature for a period of at least 12 hours to provide a crystallization of the fat of the cream,

subjecting the cooled and stored cream to a pressure of 1.5 to 3 bar, preferably 2 to 2.5 bar, until the cream is broken up,

separating the broken cream emulsion to provide a phase comprising butter grains to be collected and a phase including butter milk which is drained,

heating the collected butter grains to a temperature above the melting point of the butter fat and mixing said butter grains with cured and/or uncured butter-foreign fats and/or oils and oil soluble ingredients conventional in margarine manufacture techniques,

parallelly thereto preparing a water phase according to any known method, said water phase comprising a protein concentrate from a milk raw material and ordinary water soluble ingredients,

bringing the water phase to emulsion in the fat phase to directly provide a water-in-oil emulsion having a fat content of between 36% and 50% or preferably about 40%.

and pasteurizing, cooling and packing the emulsion as conventional.

2. Method according to claim 1, characterized in that the cream has a fat content of about 40%, and in that the butter fat obtained from the cream is added to such an amount as to form between 30% and 100% of the total fat amount of the low calorie spread.

3. Method according to claim 1 or 2, characterized in that the butter-foreign oils and/or fats added to the fat phase are chosen among the group of fats comprising cured or uncured soy oil, palm oil, colza oil, coconut oil and other fats and/or oils known in the margarine manufacturing field.

4. Method according to any of the preceding claims, characterized in that the pressure treatment of the cream is made by pumping the cream through a liquid ring pump.

5. Method according to any of the preceding claims, characterized in that the cream is preferably stored at a temperature of about +5°C for a period of 15—24 hours before being subjected to the pressure treatment to break up the cream emulsion.

6. Method according to any of the preceding claims, characterized in that the separation of the cooled and pressure treated cream is made so that the cream passes a sieve-like vibrating plate or drum on or in which the butter milk is drained whereas the butter fat is collected from the plate or drum.

## Patentansprüche

1. Verfahren zur Herstellung eines kalorienarmen Aufstrichs mit einem hohen Anteil an Milchfett und einem Gesamtfettgehalt von zwischen 36% und 50% oder vorzugsweise etwa 40%, das kein Butteröl enthält, wobei eine Fettphase und eine Protein enthaltende wässrige Phase parallel zueinander zubereitet werden und wobei die Fettphasen Butterfett oder eine Mischung aus Butterfett und butterfremden Fetten und/oder Ölen enthält und wobei die wässrige Phase zum Emulgieren mit der Fettphase gebracht wird, um direkt eine Emulsion des Wasser-In-Öl-Typs zu ergeben, dadurch gekennzeichnet,

daß durch Kühlen von Rahm mit einem Fettgehalt von 35 bis 46% auf eine Temperatur unter +15°C und Lagerung bei dieser Temperatur für eine Zeitspanne von wenigstens 12 Stunden zum Auskristallisieren des Fetts aus dem Rahm eine Fettphase zubereitet wird,

daß der gekühlte und gelagerte Rahm einem Druck von 1,5 bis 3 bar, vorzugsweise 2 bis 2,5 bar, ausgesetzt wird bis der Rahm gebrochen ist,

daß die gebrochene Rahmemulsion in eine phase, die zu sammelnde Butterkörner enthält, und eine Phase, die Buttermilch enthält, welche abgezogen wird, aufgetrennt wird,

daß die gesammelten Butterkörner auf eine Temperatur oberhalb des Schmelzpunktes des Butterfetts erhitzt und mit gehärteten und/oder ungehärteten betterfremden Fetten und/oder Ölen und öllöslichen Ingredienzien, wie sie bei Margarineherstellungprozessen üblich sind, gemischt werden,

daß parallel dazu aine wässrige Phase nach einen bekannten Verfahren zubereitet wird, wobei die wässrige Phase ein Proteinkonzentrat aus einem Milchrohmaterial und gewöhliche wasserlösliche Ingredienzien enthält,

daß die wässrige Phase in der Fettphase zum Emulgieren gebracht wird, um direkt eine Wasser-In-Öl-Emulsion mit einem Fettgehalt von zwischen 36% und 50% oder vorzugsweise etwa 40% zu ergeben, und

daß die Emulsion wie gewöhnlich pastörisiert, gekühlt und abgepackt wird.

2. Verfahran nach Anspruch 1, dadurch gekennzeichnet, daß der Rahm einen Fettgehalt von etwa 40% hat und daß das aus den Rahm erhaltene Butterfett in solcher Menge zugegeben wird, daß es zwischen 30% und 100% des Gesamtfettgehaltes des kalorienarmen Aufstrichs ausmacht.

3. Verfahren nach Anspruch 1 oder 2, dadurch gekennzeichnat, daß die butterfremden Öle und/oder Fette, die der Fettphase zugegeben werden, aus der Gruppe von Fetten ausgewählt werden, zu der gehärtetes oder ungehärtetes Sojaöl, Palmöl, Rapsöl, Kokonussöl und andere Fette und/oder Öle gehören, die auf dem Gebiet der Margarineherstellung bekannt sind.

4. Verfahren nach einem der vorstehenden Ansprüche, dadurch gekennzeichnet, daß die Druckbehandlung des Rahms durch Pumpen des Rahms durch eine Flüssigkeitsringpumpe erfolgt.

5. Verfahren nach einem der vorstehenden Ansprüche, dadurch gekennzeichnet, daß der Rahm vorzugsweise bei einer Temperatur von etwa +5°C für eine Zeitspanne von 15 bis 24 Stunden gelagert wird, bevor er der Druckbehandlung zum Brechen der Rahmemulsion ausgesetzt wird.

6. Methode nach einem der vorstehenden Ansprüche, dadurch gekennzeichnet, daß die Auftrennung des gekühlten und druckbehandelten Rahms dadurch erfolgt, daß oder Rahm eine vibrierende Siebplatte oder -trommel passiert, von der aus der die Buttermilch abgezogen wird, während das Butterfett von der Platte oder Trommel gesammelt wird.

## Revendications

1. Procédé de fabrication d'un produit à tartiner basses calories contenant une haute teneur en graisse laitière et une teneur totale en graisse comprise entre 36 et 50% ou de préférence d'environ 40% sans inclure l'huile de beurre, de sorte qu'on prépare en parallèle une phase grasse et une phase aqueuse contenant des protéines, la phase grasse comprenant de la graisse de beurre ou un mélange de graisse de beurre et de graisses et/ou huiles autres que celles du beurre, la phase aqueuse étant amenée à être émulsifiée avec la phase grasse pour fournir directement une émulsion du type eau-dans-huile, caractérisé en ce qu'il consiste:

à préparer une phase grasse en refroidissant une crème ayant une teneur en graisse de 35 à 46% à une température plus basse que +15°C et à l'emmagasiner à ladite température pendant au moins 12 heures pour assurer une cristallisation de la graisse de la crème,

à soumettre la crème refroidie et emmagasinée à une pression de l,5 à 3 bars, de préférence de 2 à 2,5 bars, jusqu'à rupture de la crème,

à séparer l'émulsion de crème rompue pour obtenir une phase comprenant des grains de beurre qu'on collecte et une phase comprenant du babeurre qu'on draine,

à chauffer les grains de beurre collectés à une température au dessus du point de fusion de la graisse de beurre et à mélanger lesdits grains de beurre avec des graisses et/ou des huiles autres que celles du beurre à l'état durci et/ou non durci et des ingrédients liposolubles qui sont classiques dans la fabrication des margarines,

à préparer en même temps une phase aqueuse par un procédé connu quelconque, ladite phase aqueuse comprenant un concentré de protéines à partir du lait brut et des ingrédients hydrosolubles ordinaires,

à amener la phase aqueuse en émulsion dans la phase grasse pour fournir directement une émulsion eau-dans-huile ayant une teneur en graisses de 36 à 50%, de préférence d'environ 40%, et

à pasteuriser, refroidir et conditionner l'émulsion de façon classique.

2. Procédé selon la revendication 1, caractérisé en ce que la crème contient environ 40% de graisse et en ce qu'on ajoute la graisse de beurre provenant de la crème en une quantité telle qu'elle constitue de 30 à 100% de la quantité totale de graisse dans le produit à tartiner basses calories.

3. Procédé selon la revendication 1 ou 2, caractérisé en ce qu'on choisit les huiles et/ou les graisses ne provenant pas du beurre qu'on ajoute à la phase grasse parmi les huiles de soja, de palme, de colza, de coco duicies ou non durcies et/ou d'autres graisses ou huiles connues dans l'industrie de fabrication des margarines.

4. Procédé selon l'une quelconque des revendications précédentes, caractérisé en ce qu'on effectue le traitement sous pression de la crème en refoulant la crème à travers une pompe annulaire à liquide.

5. Procédé selon l'une quelconque des revendications précédentes, caractérisé en ce qu'on emmagasine de préférence la crème à environ +5°C pendant 15 à 24 heures avant d'effectuer le traitement de pression pour rompre l'émulsion de crème.

6. Procédé selon l'une quelconque des revendications précédentes, caractérisé en ce qu'on effectue la séparation de la crème refroidie et traitée sous pression de façon que la crème traverse un plateau vibratoire ou tambour en forme de tamis sur ou dans lequel le lait de beurre est drainé alors que la graisse de beurre est collectée à partir du plateau ou tambour.